# EUROPEAN PATENT APPLICATION

(11) **EP 4 714 718 A1**
(43) Date of publication of application: **25.03.2026**
(21) Application number: 25190377.9
(22) Date of filing: 18.07.2025
(51) Int. Cl.: B60L 3/12, B60L 53/20, B60L 53/30, B60L 53/65, B60L 53/66, B60L 53/68, B60L 58/12, H02J 7/00

(54) **CHARGING DEVICE AND CHARGING SYSTEM**

(30) Priority: 24.09.2024 JP 2024165217
(71) Applicant: TOYOTA JIDOSHA KABUSHIKI KAISHA, Toyota-shi, Aichi-ken 471-8571 (JP)
(72) Inventor: HIROSE, Daisuke, Toyota-shi, 471-8571 (JP)
(74) Representative: D Young & Co LLP

(57) **Abstract**

A charging device (100) includes: a communication unit (13) that acquires authentication information about an EVSE (200); a processor (11) that determines, based on the authentication information, whether or not the EVSE (200) is under a time-based billing system; and a processor (21) that is capable of switching between timer charging and immediate charging. When timer charging is set and when it is determined that the EVSE (200) is under a time-based billing system, the processor (21) switches from timer charging to immediate charging.

## Description

### CROSS REFERENCE TO RELATED APPLICATIONS

This nonprovisional application is based on Japanese Patent Application No. 2024-165217 filed on September 24, 2024 with the Japan Patent Office, the entire contents of which are hereby incorporated by reference.

### BACKGROUND

### Field

The present disclosure relates to a charging device and a charging system.

### Description of the Background Art

Japanese Patent Laying-Open No. 2016-046981 discloses a charging device that monitors a charging current caused to flow into a vehicle and the time counted by a timer, and determines whether or not to start billing based on the monitoring result.

### SUMMARY

Although not disclosed in the above-mentioned Japanese Patent Laying-Open No. 2016-046981, charging (timer charging) for starting charging at the time set in advance may be performed. In the case where timer charging is performed in a charging stand that is under a time-based billing system, a fee for power charging for the time period elapsed before the set start time is charged even though power charging is actually not performed until the set start time.

The present disclosure has been made to solve the above-described problems, and an object thereof is to provide a charging device and a charging system by which, in the case where a vehicle set to start to be charged at preset time is charged at a charging stand that is under a time-based billing system, it is possible to suppress billing (fee charging) from being started even though power charging is not started.

A charging device according to the first aspect of the present disclosure is a charging device that charges a power storage device mounted in a vehicle. The charging device includes: an acquisition unit that acquires authentication information about a charging stand that supplies charging power to the power storage device; a determination unit that determines, based on the authentication information acquired by the acquisition unit, whether or not the charging stand is under a time-based billing system; and a control unit that is capable of switching between: first charging in which charging of the power storage device is started at start time set in advance; and second charging in which the charging is started before the start time. The control unit performs a switching process for switching from the first charging to the second charging when the first charging is set and when the determination unit determines that the charging stand is under a time-based billing system.

A charging system according to the second aspect of the present disclosure includes: a charging controller that controls charging of a power storage device mounted in a vehicle; and a charging device that performs the charging based on control by the charging controller. The charging controller acquires authentication information about a charging stand that supplies charging power to the power storage device. Based on the acquired authentication information, the charging controller determines whether or not the charging stand is under a time-based billing system. The charging device is capable of switching between: first charging in which charging of the power storage device is started at start time set in advance; and second charging in which the charging is started before the start time. The charging device performs a switching process for switching from the first charging to the second charging when the first charging is set and when the charging controller determines that the charging stand is under a time-based billing system.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 is a diagram showing a vehicle including a charging device and electric vehicle supply equipment (EVSE) according to one embodiment.
Fig. 2 is a diagram showing a sequence of charging between the vehicle and the EVSE according to one embodiment.
Fig. 3 is a diagram showing an image of a car navigation device of the vehicle according to one embodiment.
Fig. 4 is a diagram showing a sequence of charging between a vehicle and EVSE according to a first modification of one embodiment.
Fig. 5 is a diagram showing a sequence of charging between a vehicle and EVSE according to a second modification of one embodiment.
Fig. 6 is a diagram showing a charging system including a charging device according to a third modification of one embodiment.

### DESCRIPTION OF THE PREFERRED EMBODIMENTS

Embodiments of the present disclosure will be described with reference to the accompanying drawings. In the drawings referred to below, the same or corresponding members are denoted by the same reference numerals.

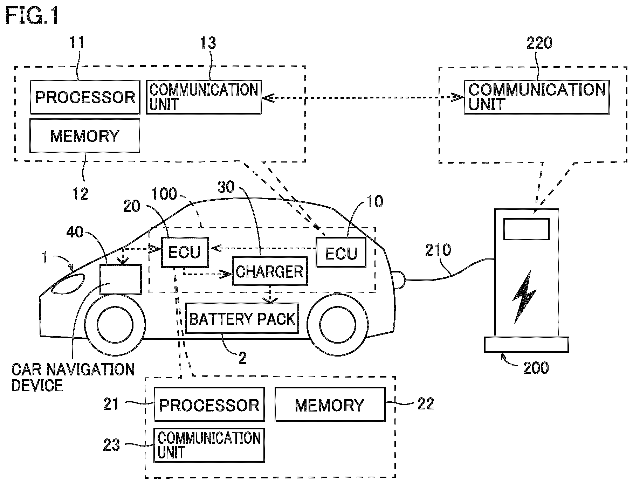

Fig. 1 is a diagram showing a configuration of a charging device 100 according to the present embodiment. As shown in Fig. 1, charging device 100 is mounted in a vehicle 1. Vehicle 1 is equipped with a battery pack 2. Charging device 100 charges battery pack 2. Battery pack 2 is an example of the "power storage device" in the present disclosure.

Battery pack 2 is a battery for traveling of vehicle 1. Vehicle 1 may be a plug-in hybrid electric vehicle (PHEV), a battery electric vehicle (BEV), a fuel cell electric vehicle (FCEV), and the like.

Vehicle 1 is electrically connected to electric vehicle supply equipment (EVSE) 200 by a charging cable 210 and thereby can exchange electric power with EVSE 200. A power storage cell (not shown) of battery pack 2 is charged with the electric power (charging power) supplied from EVSE 200. The power storage cell is a secondary battery, which is typically a lithium-ion secondary battery. The lithium-ion secondary battery is a battery using lithium as a charge carrier and may include not only a lithium-ion secondary battery with a liquid electrolyte but also an all-solid-state battery made using a solid electrolyte. The power storage cell is not limited to a lithium-ion secondary battery but may also be formed of a nickel-metal hydride secondary battery or other secondary batteries. EVSE 200 is an example of the "charging stand" in the present disclosure.

EVSE 200 is installed, for example, in public facilities (such as shopping malls or theme parks). The location where EVSE 200 is installed is not limited to the examples mentioned above.

Charging device 100 includes an authentication electronic control unit (ECU) 10, a charging ECU 20, and a charger 30. Vehicle 1 may be equipped with a single ECU having both the function of authentication ECU 10 and the function of charging ECU 20. Further, vehicle 1 is equipped with a car navigation device 40.

Authentication ECU 10 includes a processor 11, a memory 12, and a communication unit 13. Memory 12 stores not only a program executed by processor 11 but also information (for example, a map, a mathematical expression, and various parameters) used in the program. Communication unit 13 includes various communication I/Fs. Communication unit 13 communicates with a communication unit 220 of EVSE 200, for example, via a controller area network (CAN) communication. Processor 11 exchanges information with EVSE 200 (communication unit 220) through communication unit 13. Processor 11 and communication unit 13 are examples of the "determination unit" and the "acquisition unit", respectively, in the present disclosure.

Charging ECU 20 includes a processor 21, a memory 22, and a communication unit 23. Memory 22 stores not only a program executed by processor 21 but also information (for example, a map, a mathematical expression, and various parameters) used in the program. Communication unit 23 includes various communication I/Fs. Communication unit 23 communicates with communication unit 13 of authentication ECU 10 via a CAN communication. Processor 21 exchanges information with authentication ECU 10 (communication unit 13) through communication unit 23. Processor 21 is an example of the "control unit" in the present disclosure.

Processor 21 transmits a control signal for controlling charger 30 to charger 30 through communication unit 23. Charger 30 charges battery pack 2 according to the control signal from processor 21.

Each of processors 11 and 21 is, for example, a central processing unit (CPU) or a micro-processing unit (MPU). Processors 11 and 21 read a system program and a control program to deploy these programs onto memories 12 and 22, respectively, and execute the deployed programs to implement various processes. In the present specification, a "processor" is not limited to a processor in a narrow sense that performs a process in a stored-program scheme, but may include a hardwired circuit such as an application specific integrated circuit (ASIC) and a field-programmable gate array (FPGA). Thus, the term "processor" can also be interchangeably read as processing circuitry for which processing is defined in advance by computer readable codes and/or a hardwired circuit.

In the present embodiment, EVSE 200 is assumed to be under a time-based billing system. The time-based billing system is for charging a fee (i.e., billing) based on the time period elapsed since the start of the communication between the EVSE and the vehicle (since the completion of billing authentication).

Authentication ECU 10 (communication unit 13) acquires various pieces of information from EVSE 200 (communication unit 220). From EVSE 200, authentication ECU 10 acquires, for example, information about the electric power that can be supplied from EVSE 200, authentication information about EVSE 200, and the like.

The authentication information about EVSE 200 includes, for example, information indicating that EVSE 200 is a facility supporting plug-and-charge (PnC) system. Specifically, authentication ECU 10 (communication unit 13) transmits AuthorizationReq (hereinafter referred to as a request signal) to EVSE 200 for inquiring whether or not EVSE 200 supports PnC charging. In response to the request signal, EVSE 200 transmits AuthorizationRes (hereinafter referred to as a response signal) to authentication ECU 10 that indicates whether or not EVSE 200 supports PnC charging. In other words, the response signal corresponds to the above-mentioned authentication information.

When processor 11 determines that EVSE 200 is a facility supporting PnC charging, processor 11 determines that EVSE 200 is a facility that is under a time-based billing system. The PnC charging refers to a charging method in which processes such as billing authentication and power charging are automatically performed merely by connecting charging cable 210 of EVSE 200 to vehicle 1.

In general, there is a high possibility that the EVSE supporting PnC charging is under a time-based billing system. Thus, by determining that EVSE 200 supporting PnC charging is under a time-based billing system, processor 11 can determine that EVSE 200 is under a time-based billing system without having to acquire a signal directly indicating that EVSE 200 is under a time-based billing system.

Car navigation device 40 accepts various operations performed by a user of vehicle 1. For example, car navigation device 40 accepts an operation for setting timer charging. Thereby, the start time at which charging is started and the end time at which charging is ended are set in advance (before charging). The information about the start time and the end time that have been set (hereinafter referred to as timer charging information) is transmitted to communication unit 23 via CAN communication. The timer charging information acquired by communication unit 23 is stored in memory 22. Processor 21 controls charger 30 according to the timer charging information stored in memory 22. Thereby, charging is performed in a time zone based on the timer charging information. Among the start time and the end time, only the start time can also be set. Timer charging is an example of the "first charging" in the present disclosure.

If the start time and the end time are not set in car navigation device 40, charging is started immediately upon connection between EVSE 200 and vehicle 1 (this charging will be hereinafter referred to as immediate charging). Immediate charging may, for example, be charging that is started immediately (for example, within 5 minutes) after completion of the billing authentication between the vehicle and the EVSE. Immediate charging is an example of the "second charging" in the present disclosure.

In the conventional charging device, in the case where timer charging is performed in the EVSE that is under a time-based billing system, a fee for power charging for the time period elapsed before the start time is charged even though power charging is actually not performed until the set start time.

Thus, in the present embodiment, processor 21 of charging ECU 20 can switch the setting between timer charging and immediate charging. When timer charging is set and processor 11 of authentication ECU 10 determines that EVSE 200 is under a time-based billing system, processor 21 performs a switching process for switching from timer charging to immediate charging. Details thereof will be described later.

### <Charging Sequence>

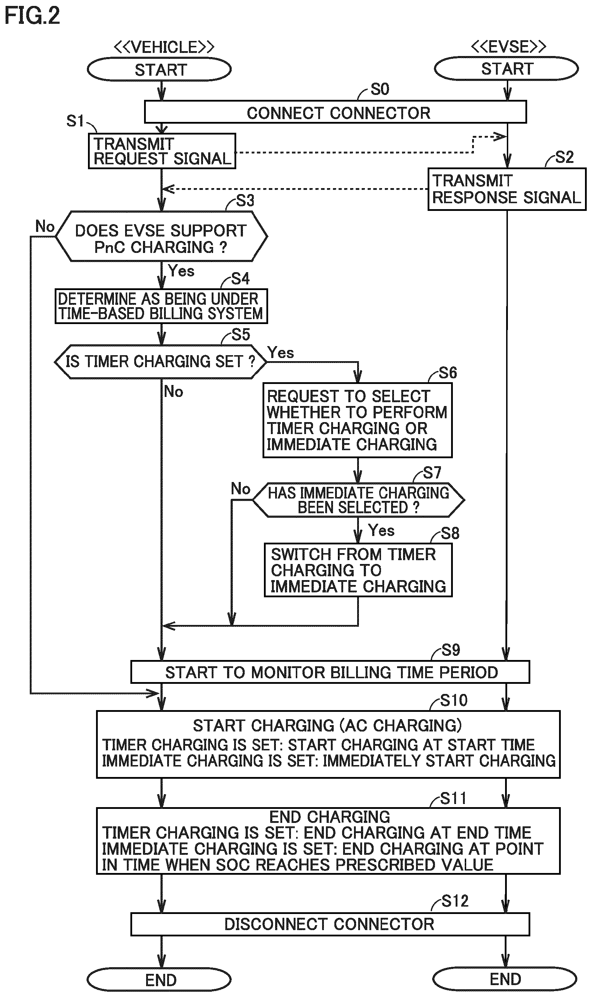

Fig. 2 shows an example of a sequence of charging between vehicle 1 and EVSE 200.

In step S0, charging cable 210 of EVSE 200 is connected to vehicle 1. This allows vehicle 1 to be charged.

In step S1, authentication ECU 10 transmits the request signal to EVSE 200 through communication unit 13.

In step S2, EVSE 200 transmits the response signal to vehicle 1 through communication unit 220.

Based on the response signal received by communication unit 13 in S2, processor 11 of authentication ECU 10 determines whether or not EVSE 200 supports PnC charging. When EVSE 200 supports PnC charging (Yes in S3), the process proceeds to step S4. When EVSE 200 does not support PnC charging (No in S3), the process proceeds to step S10. Processor 11 may determine that EVSE 200 supports PnC charging based on the situation that the frequency (duty ratio) of a control pilot signal (CPLT signal) transmitted from EVSE 200 shows a prescribed value. The CPLT signal may be included in the response signal.

In step S4, processor 11 of authentication ECU 10 determines that EVSE 200 is a facility that is under a time-based billing system.

In step S5, based on the information stored in memory 22, processor 21 of charging ECU 20 determines whether or not timer charging is set. When timer charging is set (Yes in S5), the process proceeds to step S6. When timer charging is not set (No in S5), the process proceeds to step S9.

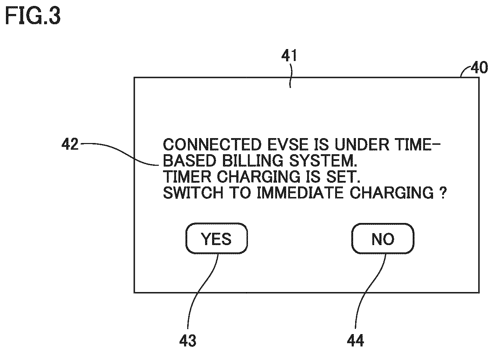

In step S6, processor 21 performs a process of requesting the user to select whether to perform timer charging or immediate charging. Specifically, processor 21 performs a process of causing car navigation device 40 to display an image 41 shown in Fig. 3. Specifically, processor 21 transmits a signal for displaying image 41 to car navigation device 40 through communication unit 23. The process in S6 is an example of the "switching process" in the present disclosure.

In this way, by making a request to select whether to perform timer charging or immediate charging, it is possible to suppress switching to immediate charging even though the user does not desire immediate charging, unlike the case where charging is automatically switched to immediate charging.

Referring to Fig. 3, image 41 shows a message 42 for asking the user whether or not to switch to immediate charging, for example, by stating "The connected EVSE is under a time-based billing system. Timer charging is set. Switch to immediate charging ?". Further, image 41 shows buttons 43 and 44 that can be tapped for enabling a selection. Button 43 is marked with "YES". Button 44 is marked with "No".

Referring again to Fig. 2, in step S7, processor 21 determines whether or not immediate charging has been selected. When immediate charging has been selected by selecting button 43 (Fig. 3) (Yes in S7), the process proceeds to step S8. When timer charging has been selected by selecting button 44 (Fig. 3) (No in S7), the process proceeds to step S9. When it is determined as No in S7, the setting of timer charging is maintained without being cancelled.

In step S8, processor 21 switches the setting from timer charging to immediate charging. The process then proceeds to step S9.

In step S9, the time period (billing time period) for which billing is made (a fee is charged) for power charging of EVSE 200 is started to be monitored. In other words, in step S9, the charging time period is increased according to the time period elapsed from 0.

In step S10, charging between vehicle 1 and EVSE 200 is started. When timer charging is set, charging is started at the start time corresponding to the timer charging information. When timer charging is not set (when immediate charging is set), charging is immediately started.

In the present embodiment, charging (timer charging and immediate charging) between vehicle 1 and EVSE 200 is performed by AC charging. In other words, EVSE 200 is a charging facility supporting AC charging.

In step S11, charging between vehicle 1 and EVSE 200 is ended. When timer charging is set, charging is ended at the end time corresponding to the timer charging information. In the case where timer charging is not set (in the case where immediate charging is set), charging is ended at the point in time when the state of charge (SOC) of battery pack 2 reaches a prescribed value (for example, 100%).

In step S12, the connection between charging cable 210 of EVSE 200 and vehicle 1 is disconnected.

Monitoring of the billing time period that has been started in step S9 may be ended at the point in time when charging is ended in step S11, or may be ended at the point in time when the connector connection is disconnected in step S12. Then, the billing amount is calculated based on the billing time period.

As described above, in the present embodiment, processor 21 performs the switching process of switching from timer charging to immediate charging when timer charging is set and when EVSE 200 is under a time-based billing system. Thereby, it is possible to suppress power charging from being not performed until the charging start time based on the setting of timer charging. As a result, it is possible to suppress a fee for power charging for the time duration elapsed before the start time from being charged even though power charging is not performed until the set start time. Therefore, it is possible to suppress billing from being started even though power charging is not started.

Further, by switching from timer charging to immediate charging, it is possible to more reliably suppress occurrence of the time period for which billing is made (a fee is charged) even though power charging is not performed.

In the present embodiment, AC charging is performed in each of timer charging and immediate charging. AC charging is often used at nighttime when charging is performed in a charging facility or the like at home. Thus, the time zone during nighttime is often set as the time period for timer charging. In this case, if timer charging is applied in a public facility, there is a high possibility that charging will not be performed at all. Thus, switching from timer charging to immediate charging as described above is particularly effective in vehicle 1 and EVSE 200 between which AC charging is performed.

### <First Modification>

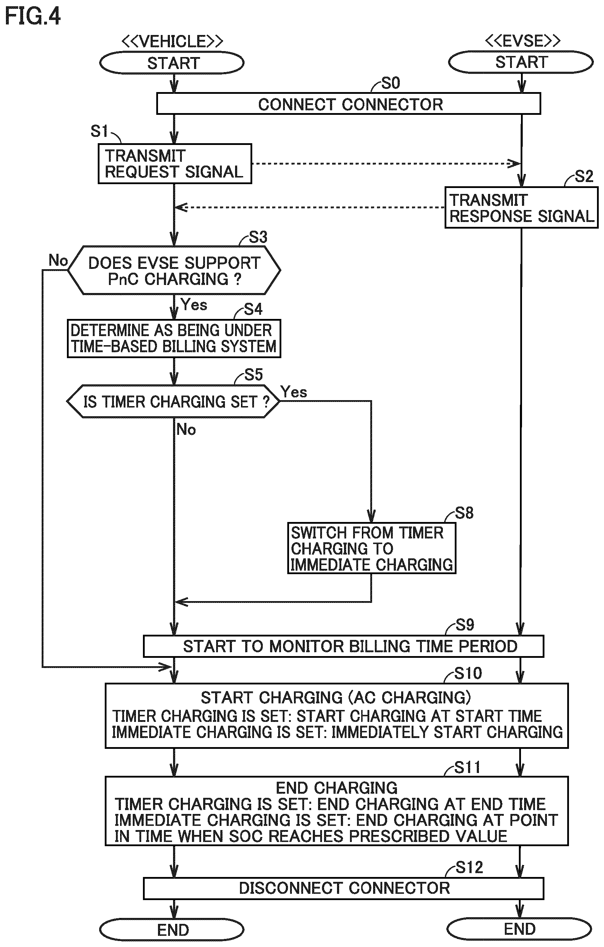

Fig. 4 is a diagram showing sequence control according to the first modification of the above-described embodiment. The example shown in Fig. 4 does not include S6 and S7 in Fig. 2 in the above-described embodiment. In other words, when it is determined in step S5 that timer charging is set (Yes in S5), the process proceeds to step S8. In the present example, when it is determined that timer charging is set, processor 21 automatically switches the setting from timer charging to immediate charging without notifying the user about the setting (performs the process in S8). The process of automatically switching the setting from timer charging to immediate charging is an example of the "switching process" in the present disclosure.

Automatically switching the setting from timer charging to immediate charging can eliminate the time and effort required for the user to perform the selection operation. As a result, the user's workload can be reduced.

### <Second Modification>

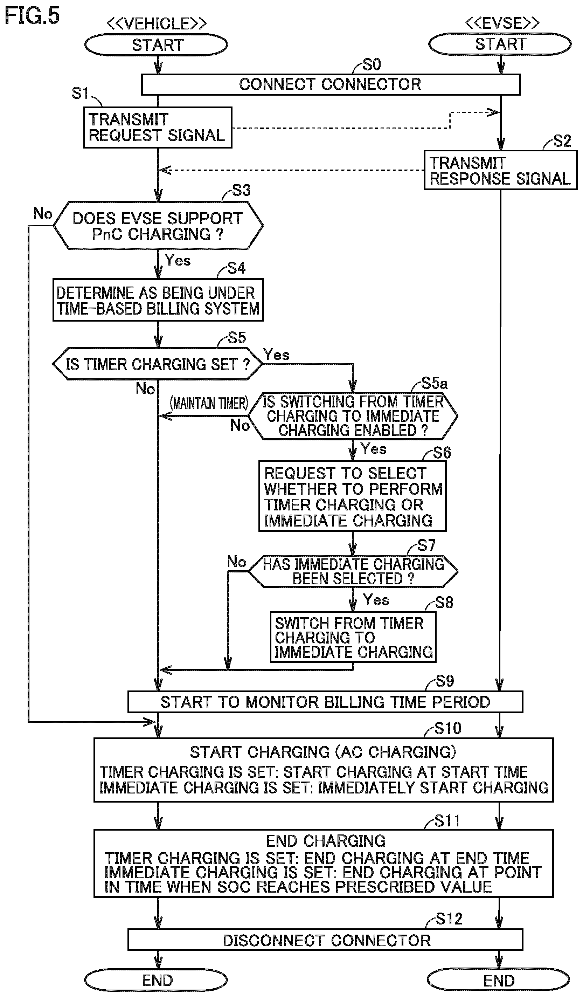

Fig. 5 is a diagram showing sequence control according to the second modification of the above-described embodiment. In the present modification, car navigation device 40 accepts the setting as to whether the switching process of switching from timer charging to immediate charging is enabled or disabled. In the example shown in Fig. 5, step S5a is added between S5 and S6 in Fig. 2 in the above-described embodiment.

In step S5a, processor 21 determines whether the switching process of switching from timer charging to immediate charging is enabled or disabled. When the switching process is enabled (Yes in S5a), the process proceeds to step S6. When the switching process is disabled (No in S5a), the process proceeds to step S9. In other words, when the switching process is disabled (No in S5a), the setting for timer charging is maintained, and thus, timer charging is started in step S10.

Thereby, it is possible to suppress the switching process from being performed against the user's intention when the user does not desire the process of switching from timer charging to immediate charging.

The process (control) in the second modification shown in Fig. 5 may be combined with the process in the above-described first modification.

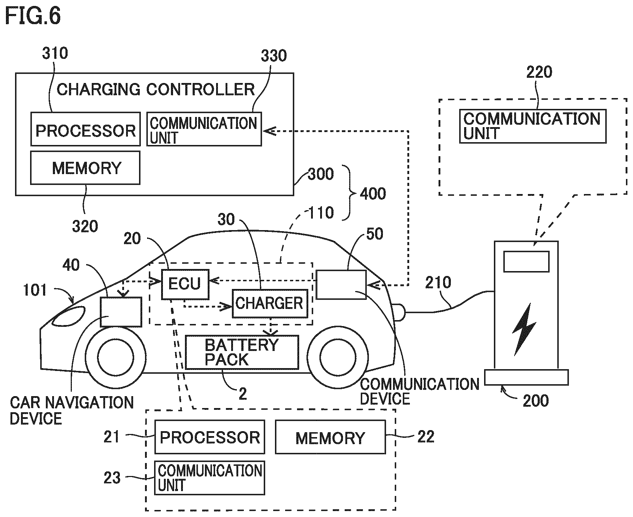

Fig. 6 is a diagram showing a configuration of charging system 400 according to the third modification of the above-described embodiment. In the example shown in Fig. 6, a charging controller 300 provided external to vehicle 1 has the function of authentication ECU 10 in the above-described embodiment. Charging controller 300 includes a processor 310, a memory 320, and a communication unit 330. Processor 310, memory 320, and communication unit 330 correspond to processor 11, memory 12, and communication unit 13, respectively, of authentication ECU 10 according to the above-described embodiment.

As shown in Fig. 6, charging ECU 20 and charger 30 constitute a charging device 110. Charging device 110 is mounted in a vehicle 101. Charging device 110 and charging controller 300 constitute a charging system 400.

Vehicle 101 includes a communication device 50. Communication device 50 performs communication (wireless communication) with communication unit 330 of charging controller 300. Communication device 50 receives the authentication information about EVSE 200 from communication unit 220 of EVSE 200. Communication device 50 transmits the received authentication information about EVSE 200 to communication unit 330.

Based on the authentication information about EVSE 200 that has been acquired by communication unit 330, processor 310 determines whether or not EVSE 200 is a facility that is under a time-based billing system. The information indicating whether or not EVSE 200 is a facility that is under a time-based billing system is transmitted to communication device 50 through communication unit 330.

From communication device 50, processor 21 of charging ECU 20 acquires, through communication unit 23, the information indicating whether or not EVSE 200 is a facility that is under a time-based billing system. Processor 21 performs the process described in the above-described embodiment based on the information indicating whether or not EVSE 200 is under a time-based billing system.

Communication unit 330 of charging controller 300 may directly communicate with communication unit 220 of EVSE 200. In this case, communication unit 330 may receive the authentication information about EVSE 200 from EVSE 200.

In the example shown in Fig. 6, only the function of authentication ECU 10 in the above-described embodiment is provided in charging controller 300 external to vehicle 1, but, for example, the function of charging ECU 20 may also be provided in charging controller 300.

### <Other Modifications>

In the example described in the above embodiment, the setting is switched from timer charging to immediate charging, but the present disclosure is not limited thereto. For example, the setting may be switched from timer charging to charging that is started after immediate charging and before the start time of timer charging. For example, the setting may be switched to charging that is started a prescribed time period (for example, two hours) before the start time of timer charging, or may be switched to charging that is started a prescribed time period (for example, one hour) after the current time. The prescribed time period may be a fixed value set in advance.

In the example described in the above embodiment, based on the information indicating that EVSE 200 supports PnC charging, it is determined that EVSE 200 is under a time-based billing system, but the present disclosure is not limited thereto. For example, the information directly indicating that EVSE 200 is under a time-based billing system may be transmitted from EVSE 200 to vehicle 1. In this case, EVSE 200 may support charging (for example, charging by external identification means (EIM)) other than PnC charging.

In the example described in the above embodiment, charging between vehicle 1 and EVSE 200 is AC charging, but the present disclosure is not limited thereto. Charging between vehicle 1 and EVSE 200 may be DC charging.

In the example described in the above embodiment, the charging sequence proceeds based on the operation performed by the user on car navigation device 40, but the present disclosure is not limited thereto. For example, the charging sequence may proceed based on the operation performed by the user on a user terminal (for example, a smartphone, a tablet and the like) capable of communicating with vehicle 1.

In the example described in the above embodiment, charging device 100 is provided in vehicle 1, but the present disclosure is not limited thereto. For example, the charging device may be provided in the EVSE.

In the example described in the above embodiment, in the case where immediate charging is set, charging is completed at the point in time when the SOC reaches the prescribed value, but the present disclosure is not limited thereto. For example, charging may be ended at the point in time when the time period for performing charging reaches a prescribed time period. The prescribed time period may, for example, be a time period from the charging start time to the charging end time that have been set in timer charging. The prescribed time period may be a fixed value.

Although the embodiments of the present disclosure have been described, it should be understood that the embodiments disclosed herein are illustrative and not restrictive in every respect. The scope of the present disclosure is defined by the terms of the claims, and is intended to include any modifications within the scope and meaning equivalent to the terms of the claims.

## Claims

1. A charging device (100) that charges a power storage device (2) mounted in a vehicle (1), the charging device (100) comprising:
an acquisition unit (13) that acquires authentication information about a charging stand (200) that supplies charging power to the power storage device;
a determination unit (11) that determines, based on the authentication information acquired by the acquisition unit, whether or not the charging stand is under a time-based billing system; and
a control unit (21) that is capable of switching between
first charging in which charging of the power storage device is started at start time set in advance, and
second charging in which the charging is started before the start time, wherein
the control unit performs a switching process for switching from the first charging to the second charging when the first charging is set and when the determination unit determines that the charging stand is under a time-based billing system.

2. The charging device according to claim 1, wherein the control unit starts the charging immediately after the first charging is switched to the second charging.

3. The charging device according to claim 1 or 2, wherein the switching process includes a process of requesting a user of the vehicle to select whether to perform the first charging or the second charging.

4. The charging device according to claim 1 or 2, wherein
the control unit is capable of switching the switching process to be enabled or disabled, and
in a case where the switching process is disabled, the control unit maintains the first charging when the first charging is set and when the determination unit determines that the charging stand is under a time-based billing system.

5. The charging device according to claim 1 or 2, wherein, when the acquisition unit acquires the authentication information indicating that the charging stand supports PnC charging, the determination unit determines that the charging stand is under a time-based billing system.

6. The charging device according to claim 1 or 2, wherein each of the first charging and the second charging is implemented by AC charging.

7. A charging system (400) comprising:
a charging controller (300) that controls charging of a power storage device (2) mounted in a vehicle (101); and
a charging device (110) that performs the charging based on control by the charging controller, wherein
the charging controller acquires authentication information about a charging stand (200) that supplies charging power to the power storage device,
based on the acquired authentication information, the charging controller determines whether or not the charging stand is under a time-based billing system,
the charging device is capable of switching between
first charging in which charging of the power storage device is started at start time set in advance, and
second charging in which the charging is started before the start time, and
the charging device performs a switching process for switching from the first charging to the second charging when the first charging is set and when the charging controller determines that the charging stand is under a time-based billing system.
